# EUROPEAN PATENT SPECIFICATION

(11) **EP 1 953 497 B1**
(45) Date of publication and mention of the grant of the patent: **26.08.2009**
(21) Application number: 08001542.3
(22) Date of filing: 28.01.2008
(51) Int. Cl.: G01B 21/04, G01B 5/012

(54) **Touch probe with cleaning function**
Tastkopf mit Reinigungsfunktion
Tête de palpage avec fonction de nettoyage

(30) Priority: 31.01.2007 JP 2007021087
(43) Date of publication of application: 06.08.2008
(73) Proprietor: Mitutoyo Corporation, Kawasaki-shi, Kanagawa 213-8533 (JP)
(72) Inventor: Nemoto, Kentaro, Kawasaki-shi Kanagawa 213-8533 (JP); Yamamoto, Takeshi, Kawasaki-shi Kanagawa 213-8533 (JP)
(74) Representative: Grünecker, Kinkeldey, Stockmair & Schwanhäusser Anwaltssozietät

(56) References cited:
- EP-A- 0 965 816
- EP-A- 1 004 846
- WO-A-84/01621
- JP-A- 56 053 401
- JP-A- 60 064 205
- JP-A- 2000 155 002

## Description

### BACKGROUND OF THE INVENTION

### 1. FIELD OF THE INVENTION

The present invention relates to a measuring machine for measuring dimensions, profiles and the like of an object with a probe, such as a coordinate measuring machine (CMM).

### 2. DESCRIPTION OF RELATED ART

Conventionally, a CMM is known as a measuring machine for measuring dimensions, profiles and the like of an object.

A conventional CMM includes, for example, a base, on which a horizontal table sits and a column movable in a horizontal direction (Y direction) stands. A saddle is provided to the column to be movable in a direction (X direction) horizontally perpendicular to the column movement direction, to which a probe is provided via a spindle slidable in a vertical direction (Z direction). The probe includes a stylus attached to a main body in a vertically slidable manner.

In such a CMM, the probe is moved in the three directions as needed with respect to an object placed on the table and a distal end of the stylus is contacted to a target portion on a surface of the object to obtain a dimension, a profile or the like of the object.

In the meantime, if dust, swarf or the like is on the target portion of the object, a spike noise or the like causes a measurement error, thereby obstructing an accurate measurement. Consequently, on measuring a dimension, a profile or the like of the object, the target portion of the object needs to be cleaned in advance.

Conventionally before conducting a profile measurement of an object by a CMM, for example, a target portion of an object is wiped by an industrial wiper wetted with a solvent, or high pressure air is blown to the object with a spray, an air blower or the like to remove dust, swarf or the like on the target portion of the object.

Document JP-A-2000-35325 proposes a cleaner-equipped measuring machine provided with a cleaner for blowing air around a distal end of a probe, which can remove dust or the like on a target surface of an object while measuring a profile of an object.

However, the conventional cleaning method has the following problems.

For example, with regard to wiping a target portion of an object by an industrial wiper, strong wiping may damage the target portion. With regards to cleaning by a spray, an air blower or the like, when an air nozzle of a spray or an air blower is moved near to a target portion of an object, the nozzle may contact with a stylus of a probe or a target portion of an object to destroy them, or air blowout pressure may destroy the delicately-structured stylus.

Likewise, in the cleaner-equipped measuring machine disclosed in the above document, since air is obliquely blown to the stylus, air is blown directly toward the stylus, so that a blowout pressure may possibly destroy a delicately-structured stylus.

JP-A-56053401 discloses a three-dimensional type contact detector which uses air nozzles for an air bearing for a feeler.

JP-A-200155002 discloses a probe for shape measurement which uses a stylus that is contactlessly supported by a probe body through a first non-contact support means. Further, a contact ball is contactlessly supported by the tip end of the stylus through a second noncontact support means. The noncontact support means use magnetic forces.

WO 84/01621 relates to a position sensing apparatus using a stylus including a fluid flow duct that can direct a fluid onto the end of the stylus to keep the end clean.

EP A-1004 846 relates to a work measuring probe with cleaning function. The work measuring probe comprises a contact member that is provided with an outlet port for jetting a fluid for cleaning the portion to be measured of the work.

### SUMMARY OF THE INVENTION

An object of the present invention is to provide a measuring machine, in which cleanness of a target portion of an object can be obtained without destroying a stylus or damaging the target portion, thereby improving the reliability of measurement.

A measuring machine according to the present invention that has a probe to be contacted to a target portion of an object while the probe and the object are relatively displaced to measure a dimension and the like of the object by the relative displacement includes an air controller that supplies or sucks air, in which the probe includes a stylus that has a distal end to be contacted to the target portion of the object and a cleaner that is connected to the air controller to blow air to the vicinity of the distal end or suck air from the vicinity of the distal end, and the cleaner blows or sucks air substantially in the same direction as the stylus and it is characterised in that the probe includes a stylus protector that covers the stylus, and the cleaner is provided to the stylus protector.

Since the cleaner connected to the air controller blows air to or sucks air from the vicinity of the distal end of the stylus, dust or the like on the target portion of the object can be removed in advance to measurement.

In other words, when the distal end of the probe is moved to the vicinity of the target portion of the object and the cleaner blows air, dust or the like on the target portion can be blown and removed. When the cleaner sucks air, dust or the like can be sucked and removed. Consequently, a clean target portion is secured to improve the reliability of measurement and achieve highly accurate measurement.

Also, contrary to a conventional arrangement, there is no need to clean the target portion with an industrial wiper, a spray, an air blower or the like, so that a nozzle of the spray, the air blower or the like does not destroy the stylus or damage the target portion of the object. Since there is no need to prepare the industrial wiper, the spray, the air blower and the like for cleaning, efficiency in measuring process is improved.

Furthermore, since the cleaner blows or sucks air substantially in the same direction as the stylus, air is not blown directly toward the stylus so that force is not obliquely applied to the stylus, thereby preventing blowout pressure from damaging the stylus with delicate structure.

Therefore, in the measuring machine of the present invention, a clean target portion can be secured without destroying the stylus or damaging the target portion of the object, so that the reliability of measurement can be improved.

Since the cleaner is provided to the stylus protector that covers the stylus, while the stylus protector protects the stylus, the cleaner can remove dust or the like on the target portion of the object.

It is preferable that in the measuring machine, the stylus protector is a hollow member having an opening on an end near the distal end, the stylus is inserted into the opening of the stylus protector, and the cleaner blows or sucks air via a hollow portion and the opening of the stylus protector.

According to this arrangement, even if air flow supplied by the air controller is in a different direction from the stylus, since the cleaner blows or sucks air via the hollow portion and the opening in the stylus protector, air blowout or suction by the cleaner can be substantially in the same direction as the stylus. Accordingly, damages to the stylus with delicate structure can be prevented, and at the same time, dust or the like in the vicinity of the distal end can be appropriately removed.

It is preferable that in the measuring machine, the probe is attached to a movable member provided in a manner movable via an air bearing, and the air controller supplies air to the cleaner and the air bearing.

According to this arrangement, since the air controller supplies air to both the cleaner and the air bearing, there is no need to provide an air controller dedicated for the cleaner. Accordingly, downsizing of the measuring machine can be achieved as well as reduction of production costs. In addition, power required for measurement can be saved as compared to an arrangement provided with the air controller dedicated for the cleaner.

It is preferable that in the measuring machine, the movable member includes an air guide that guides air consumed by the air bearing to the cleaner, and the air controller supplies air to the air cleaner via the air bearing and the air guide.

According to this arrangement, since the movable member has the air guide for guiding air consumed by the air bearing to the cleaner and the air controller supplies air to the cleaner via the air guide, there is no need to provide piping for supplying air to the cleaner from the air controller, thereby simplifying the arrangement of the measuring machine.

It is preferable that the measuring machine further includes: a temperature controlled space isolated from the exterior; and a temperature controller that supplies air of predetermined temperature to the temperature controlled space to control temperature of the temperature controlled space, in which temperature controlled space the probe is provided, and the temperature controller serves as the air controller that supplies air of the predetermined temperature to the cleaner.

According to this arrangement, since the temperature controller not only supplies air of predetermined temperature to the temperature controlled space, but also serves as the air controller that supplies air of the predetermined temperature to the cleaner, there is no need to provide an air controller dedicated for the cleaner. Accordingly, downsizing of the measuring machine can be achieved as well as reduction of production costs. In addition, power required for measurement can be saved as compared to an arrangement provided with the air controller dedicated for the cleaner.

### BRIEF DESCRIPTION OF THE DRAWINGS

Fig. 1 is a front view of a coordinate measuring machine (CCM) according to a first embodiment of the present invention.
Fig. 2 is a schematic sectional view of the vicinity of a probe of the CCM according to the first embodiment.
Fig. 3 is a sectional view of the vicinity of a distal end of the probe at the time of cleaning a target portion of an object with the CCM according to the first embodiment.
Fig. 4 is a schematic sectional view of a coordinate measuring machine (CCM) according to a second embodiment of the present invention.
Fig. 5 is a sectional view of the vicinity of a distal end of the probe at the time of cleaning a target portion of an object with the CCM according to the second embodiment.
Fig. 6 is a schematic sectional view of the vicinity of a probe of the CCM according to a modification of the first embodiment.
Fig. 7 is a schematic sectional view of the vicinity of a probe of the CCM according to a modification of the embodiments of the present invention.
Fig. 8 is a sectional view of the vicinity of a distal end of a probe at the time of cleaning a target portion of an object with a CCM according to another modification of the embodiments of the present invention.
Fig. 9 is a sectional view of the vicinity of a distal end of a probe at the time of cleaning a target portion of an object with a CCM according to still another modification of the embodiments of the present invention.
Fig. 10 is a sectional view of the vicinity of a distal end of the probe at the time of cleaning a target portion of an object with the CCM according to the first embodiment of the present invention.

### DETAILED DESCRIPTION OF PREFERRED EMBODIMENTS

Embodiments of the present invention will be described below with reference to the drawings.

It should be noted that a measuring machine in each of the embodiments below is a coordinate measuring machine (CMM) whose probe is movable in three directions, i.e. X-axis, Y-axis and Z-axis directions.

### [First Embodiment]

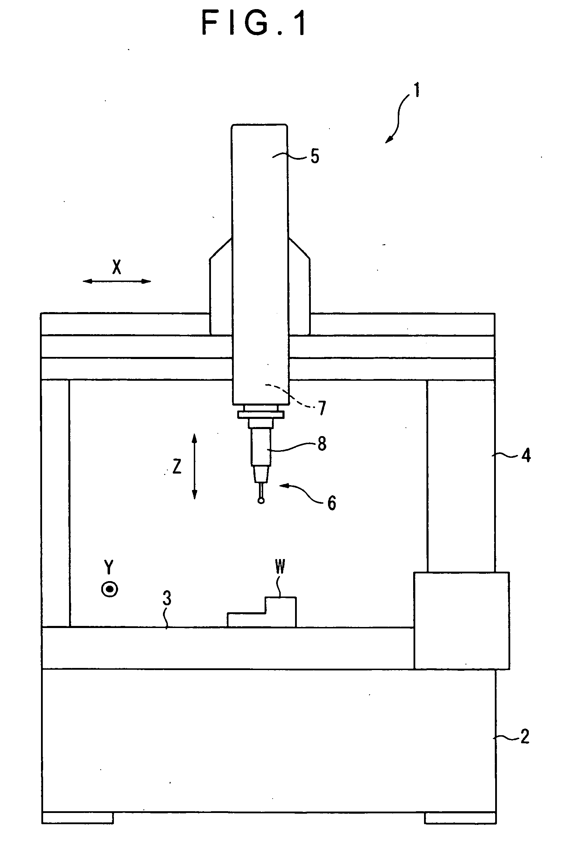

Fig. 1 shows a front view of a CMM according to a first embodiment of the present invention.

As shown in Fig. 1, the CMM 1 according to the embodiment includes a base 2.

On the base 2, a horizontal table 3 for placing an object W is provided, and a column 4 horizontally movable in a direction (Y-axis direction) perpendicular to the drawing is provided standing.

A saddle 5 movable in a horizontal direction (X-axis direction) vertically crossing the Y-axis direction is provided to the column 4. A spindle 8 that is a movable member is provided to the saddle 5 in a manner movable via an air bearing 7 along an up/down direction (Z-axis direction). The probe 6 is provided to a distal end of the spindle 8.

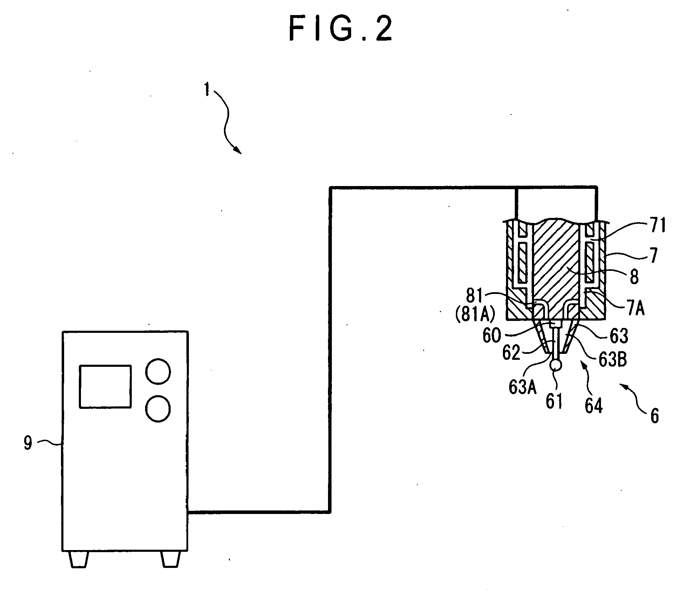

In addition, the CMM 1 includes an air controller 9 (see Fig. 2) supplying air to the air bearing 7.

Fig. 2 shows a schematic sectional view of the vicinity of the probe 6.

As shown in Fig. 2, the probe 6 includes a detector 60 provided to a substantial center of a lower end surface of the spindle 8, a stylus 62 inserted into and supported by the detector 60, a stylus protector 63 that covers the stylus 62, and a cleaner 64 provided to the stylus protector 63 to blow air to the vicinity of a distal end 61 of the stylus 62.

The spindle 8 is a substantially cylindrical member supported in a manner slidable in an up/down direction by the substantially cylindrical air bearing 7 that covers the spindle 8. Besides, the spindle 8 includes an air guide 81 for guiding air consumed by the air bearing 7 to the cleaner 64. The air guide 81 is a plurality of L-shaped holes 81A that connect a lower portion of an outer circumference of the spindle 8 and the lower end surface of the spindle 8.

As shown in Fig. 2, the air bearing 7, connected to the air controller 9, includes a blower 71 that blows air supplied from the air controller 9 against the spindle 8. The air blown by the blower 71 supports the spindle 8 in a manner slidable in the up/down direction. The air blown from the blower 71, i.e. the air consumed by the air bearing 7, then passes through a space 7A between the outer circumference of the spindle 8 and an inner circumference of the air bearing 7 and through the L-shaped hole 81A of the spindle 8 before being blown at the lower end surface of the spindle 8.

The stylus 62 of the probe 6 is a substantially stick-shaped member whose substantially spherical distal end 61 is for contacting a target portion of an object W and other end is supported by the detector 60 provided to the substantial center of the lower end surface of the spindle 8.

The detector 60 provided to the substantial center of the lower end surface of the spindle 8 supports the stylus 62 and detects a displacement of the stylus 62 in the up/down direction (Z direction) as well.

The stylus protector 63 is a hollow member whose end near the distal end 61 has an opening 63A, into which the stylus 62 is inserted. The profile of the stylus protector 63 is a substantial cylinder that radially narrows toward the distal end 61, and the end of the stylus protector 63 opposite to the opening 63A is fixed to the lower end surface of the spindle 8 so that the outer circumference of the stylus protector 63 continues to the outer circumference of the spindle 8.

The cleaner 64 includes a hollow portion 63B in the stylus protector 63 and the opening 63A of the stylus protector 63. Air consumed by the air bearing 7 and blown via the L-shaped holes 81A to the lower end surface of the spindle 8 is blown by the cleaner 64 to the vicinity of the distal end 61 of the stylus 62 via the hollow portion 63B and the opening 63A in the stylus protector 63.

How to use such a CMM 1 to measure a dimension, profile or the like of the object W will be described.

Initially, the target portion of the object W is cleaned with the cleaner 64.

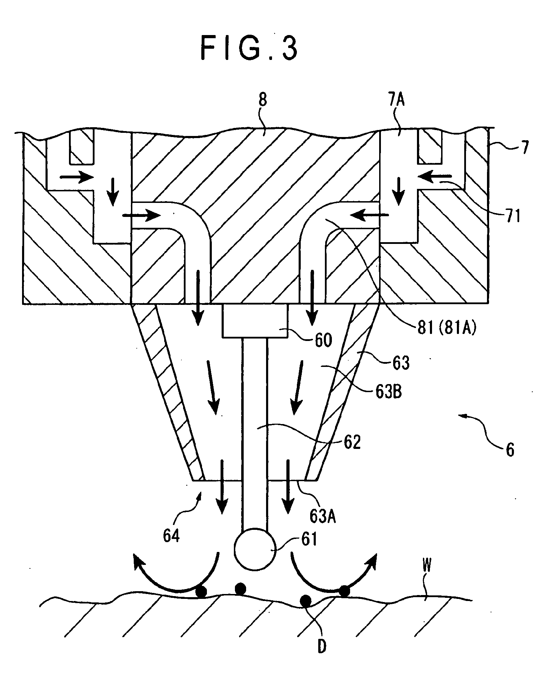

Fig. 3 shows a sectional view of the vicinity of the probe 6 at the time of cleaning the target portion.

First, the air controller 9 is operated to start air supply to the air bearing 7.

As shown in Fig. 3, air is then blown from the blower 71 of the air bearing 7 to support the probe 6 in a manner movable in the up/down direction. The air consumed by the air bearing 7 subsequently blows to the lower end surface of the spindle 8 after passing through the space 7A between the outer circumference of the spindle 8 and the inner circumference of the air bearing 7 and the L-shaped hole 81A of the spindle 8. The air blows to the vicinity of the distal end 61 of the stylus 62 further via the hollow portion 63B and the opening 63A of the stylus protector 63. Such a blowout of air from the opening 63A is substantially in the same direction as the stylus 62.

Next, the column 4, the saddle 5, and the spindle 8 are operated to properly move the probe 6 in the three directions to move the distal end 61 to the vicinity of the target portion of the object W. As shown in Fig. 3, the air blowout from the opening 63A can blow away and remove dust D in the vicinity of the target portion.

Similarly to a conventional CMM 1, the probe 6 is properly moved in the three directions after the target portion has been cleaned, so that the distal end 61 is contacted to the target portion of the object W to obtain coordinates which define a dimension, profile and the like of the object W.

According to the embodiment, there are the following effects.
(1) The distal end 61 of the probe 6 is moved to the vicinity of the target portion of the object W, where the cleaner 64 blows air, so that dust D and the like on the target portion can be blown away to be removed. Consequently, a clean target portion is secured to improve the reliability of measurement and achieve highly accurate measurement.
(2) Contrary to a conventional arrangement, there is no need to clean the target portion with an industrial wiper, a spray, air blower or the like, so that there is no chance of a nozzle of the spray, the air blower or the like destroying the stylus 62 or damaging the target portion of the object W. Since there is no need to prepare the industrial wiper, the spray, the air blower and the like for cleaning, efficiency in measuring process efficiency is improved.
(3) Since the cleaner 64 blows air substantially in the same direction as the stylus 62, dust D or the like in the vicinity of the target portion can be appropriately removed by having the cleaner 64 blow air in the vicinity of the target portion of the object W to which the distal end 61 of the probe 6 is moved, without providing a driving mechanism for a cleaner that rotates the cleaner in accordance with the relative position to the object W as in the cleaner-equipped measuring machine disclosed in the above-mentioned document.
(4) Since the blowout and suction of air are substantially in the same direction as the stylus 62, the air is not blown directly toward the stylus 62, thereby preventing blowout pressure from damaging the stylus 62 with delicate structure.
(5) Since the cleaner 64 is provided to the stylus protector 63 that covers the stylus 62, the cleaner 64 can remove dust D or the like on the target portion of the object W while protecting the stylus 62 with the stylus protector 63.
(6) Since the cleaner 64 blows air via the hollow portion 63B and the opening 63A in the stylus protector 63, the air blowout by the cleaner 64 can be substantially in the same direction as the stylus 62. Accordingly, damages to the stylus 62 with delicate structure can be prevented, and at the same time, dust D or the like in the vicinity of the distal end 61 can be appropriately removed.
   In the embodiment, the stylus protector 63 in particular has a substantially cylindrical profile that narrows toward the distal end 61 of the stylus 62, so that even if a blowout direction of air supplied to the hollow portion 63B is misaligned with the direction of the stylus 62, the moving direction of air is corrected by the inner circumference of the stylus protector 63. Therefore, an air blowout substantially in the same direction as the stylus 62 can be ensured.
(7) Since the air controller 9 supplies air to both the cleaner 64 and the air bearing 7, there is no need to provide an air controller 9 dedicated for the cleaner 64. Accordingly, downsizing of the CMM 1 can be achieved as well as reduction of production costs. In addition, power required for measurement can be saved as compared to an arrangement provided with the air controller 9 dedicated for the cleaner 64.
(8) Since the spindle 8 has the air guide 81 for guiding air consumed by the air bearing 7 to the cleaner 64 and the air controller 9 supplies air to the cleaner 64 via the air guide 81, there is no need to provide piping for supplying air to the cleaner 64 from the air controller 9, thereby simplifying the arrangement of the CMM 1.

### [Second Embodiment]

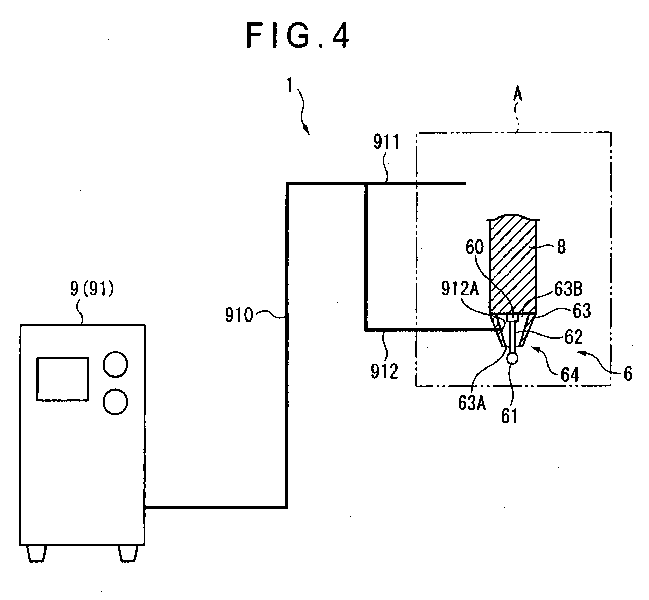

Fig. 4 shows a schematic sectional view of the vicinity of the probe 6 of the CMM 1 according to a second embodiment of the present invention.

Here, the embodiment is different from the first embodiment in the arrangement of the spindle 8 and the air controller 9 and the method of supplying air to the probe 6. The other arrangements and effects are the same, where the same reference numerals are affixed to omit detailed explanation thereof.

The CMM 1 of the embodiment includes a temperature controlled space A and a temperature controller 91 for supplying air of predetermined temperature to the temperature controlled space A to control the temperature of the temperature controlled space A.

The temperature controller 91 supplies air of the predetermined temperature to the temperature controlled space A via piping 910 and 911. The temperature controller 91 also serves as the air controller 9 that supplies air of predetermined temperature to the cleaner 64 via the piping 910 and 912.

The probe 6 of the embodiment is provided to the interior of the temperature controlled space A. The spindle 8 is not provided with the air guide 81, whereas the piping 912 from the temperature controller 91 is connected to the stylus protector 63 of the probe 6. The piping 912 penetrates from the outer circumference to the inner circumference of the stylus protector 63, and an air blower 912A on an end of the piping 912 is placed in the hollow portion 63B of the stylus protector 63.

How to use such a CMM 1 to clean the target portion of the object W will be described.

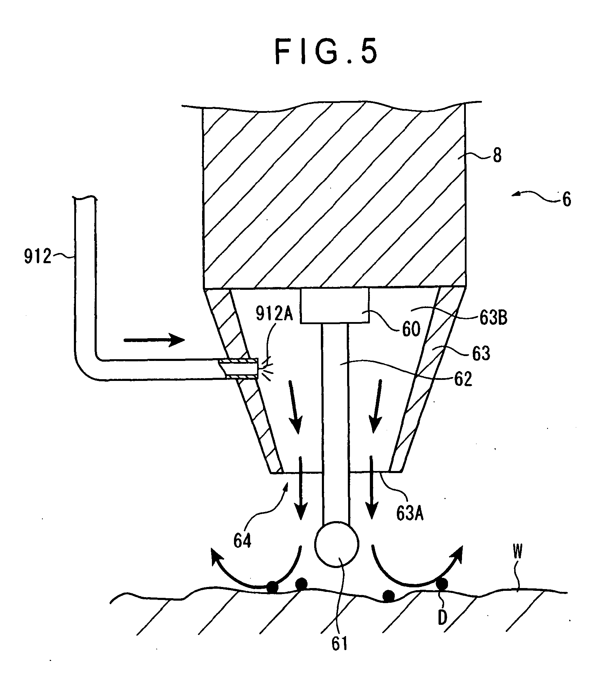

Fig. 5 shows a sectional view of the vicinity of the distal end of the probe 6 at the time of cleaning the target portion with the cleaner 64 of the embodiment.

First, the temperature controller 91 is operated to start supplying air of the predetermined temperature to the temperature controlled space A and the cleaner 64.

As shown in Fig. 5, air is then blown from the air blower 912A to the hollow portion 63B of the stylus protector 63. The air blows to the vicinity of the distal end 61 of the stylus 62 further via the hollow portion 63B and the opening 63A of the stylus protector 63. Such a blowout of air from the opening 63A is in the substantially same direction as the stylus 62.

Next, the column 4, the saddle 5, and the spindle 8 are operated to move the distal end 61 of the probe 6 to the vicinity of the target portion of the object W. As shown in Fig. 5, the air blowout from the opening 63A can then blow away and remove dust D in the vicinity of the target portion.

According to the embodiment, the following effect is obtained in addition to the effects substantially the same as the effects (1) to (6) of the first embodiment.
(9) Since the temperature controller 91 not only supplies air of predetermined temperature to the temperature controlled space A, but also serves as the air controller 9 that supplies air of the predetermined temperature to the cleaner 64, there is no need to provide an air controller 9 dedicated for the cleaner 64. Accordingly, downsizing of the CMM 1 can be achieved as well as reduction of production costs. In addition, power required for measurement can be saved as compared to an arrangement provided with the air controller 9 dedicated for the cleaner 64.

It should be noted that the present invention is not limited to the above embodiments, but includes other arrangements and the like that can achieve an object of the present invention. The following modifications and the like are also included in the scope of the present invention.
(i) In the first embodiment, the arrangement in which the spindle 8 has the air guide 81 and the air controller supplies air to the cleaner 64 via the air guide 81 has been shown as an example, but the scope of the present invention is not limited thereto.

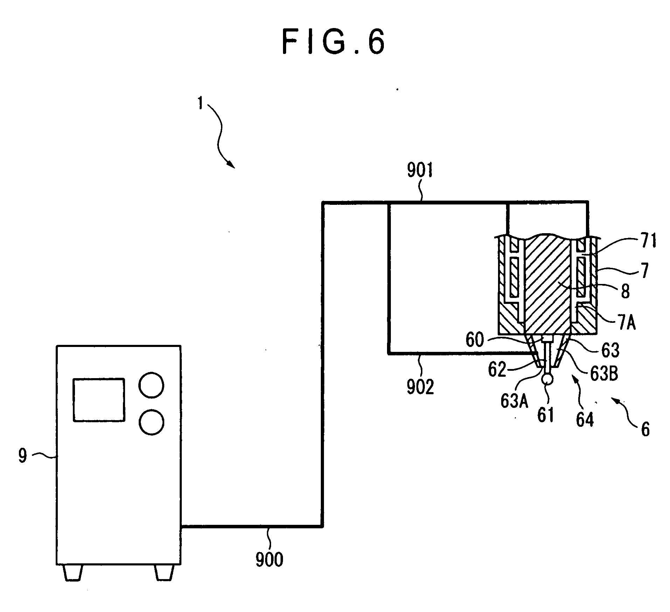

For instance, as shown in Fig. 6, an arrangement in which the spindle 8 does not have the air guide 81 and the air controller 9 supplies air to the air bearing 7 via the piping 900 and 901 and to the cleaner 64 via the piping 900 and 902 may be employed.

The arrangement differs from the first embodiment in that the additional piping 902 is necessary, but the single air controller 9 can supply air to both the air bearing 7 and the cleaner 64 so that the cleaner 64 can blow air substantially in the same direction as the stylus 62, thereby providing desirable functions and effects similar to the first embodiment.
(ii) In the above embodiments, the arrangement in which the air controller 9 for supplying air to the air bearing 7 and the temperature controlled space A also supplies air to the cleaner 64 is shown as an example, but the scope of the present invention is not limited thereto.

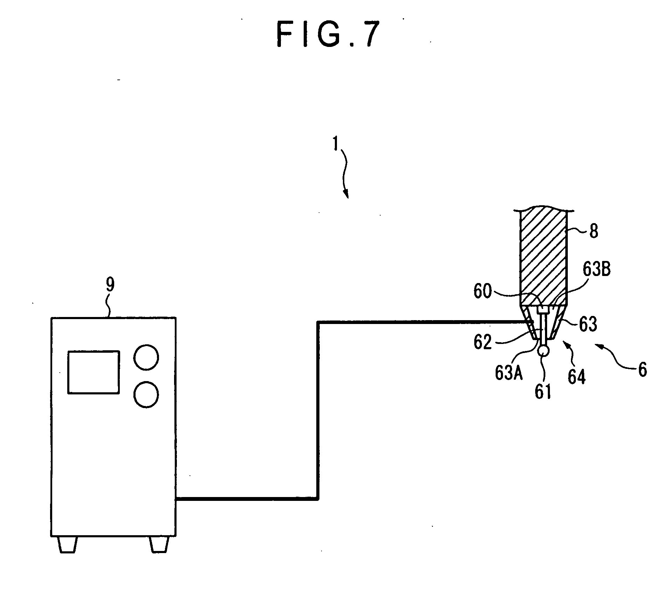

For instance, as shown in Fig. 7, an arrangement may include the air controller 9 dedicated for the cleaner 64. In such an arrangement, the cleaner 64 can also blow air substantially in the same direction as the stylus 62, so that the desirable functions and effects similar to the above embodiments can be obtained.
(iii) In the above embodiments, the cleaner 64 that blows air to the vicinity of the distal end 61 of the stylus 62 is shown as an example, but the scope of the present invention is not limited thereto.

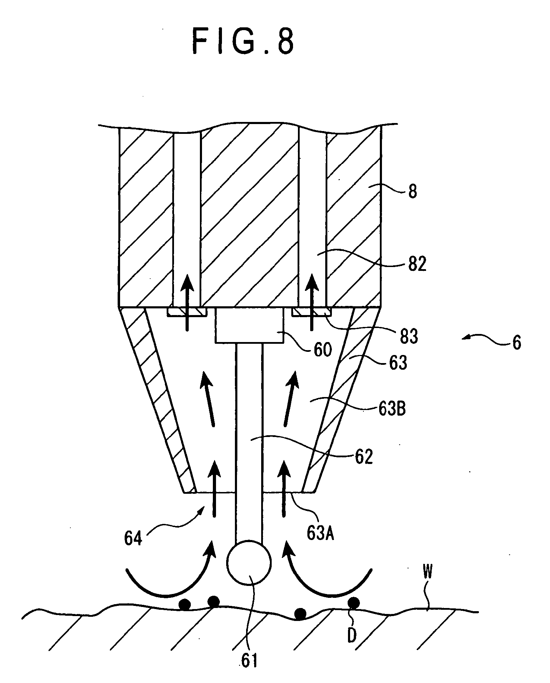

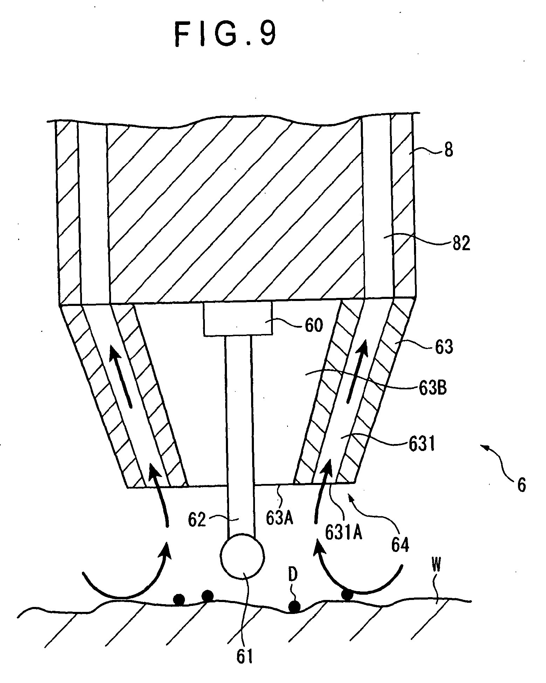

For instance, as shown in Figs. 8 and 9, an arrangement in which the probe 6 includes the cleaner 64 that sucks air from the vicinity of the distal end 61 may be employed.

In a modification shown in Fig. 8, the spindle 8 has an air channel 82 substantially in parallel to the axis of the spindle 8 and a filter 83 provided to the lower end surface of the spindle 8 that covers an opening of the air channel 82.

The filter 83 is formed of a film or the like that allows air, but not dust D or the like, to pass through. An end of the air channel 82 opposite the filter 83 is connected to the air controller 9 (not shown). Here, the air controller 9 is an air suction pump that sucks air. The cleaner 64 includes the air channel 82, the filter 83, and the hollow portion 63B and the opening 63A of the stylus protector 63.

Such a cleaner 64 sucks air from the vicinity of the distal end 61 of the stylus 62 via the air channel 82 and the hollow portion 63B and the opening 63A of the stylus protector 63. Accordingly, the cleaner 64 can suck and remove the dust D or the like on the target portion of the object W, so that the desirable functions and effects similar to the above embodiments can be obtained.

Further, since the filter 83 that covers the opening of the air channel 82 is formed of the film that allows air to pass through but not dust or the like, the dust D and the like sucked from the target portion of the object W is removed by the filter 83. Therefore, the air suction pump is free from troubles such as malfunctions or the like caused by the air suction pump (air controller 9) sucking the dust D or the like.

It should be noted that a filter similar to the filter 83 may be provided, for example, to a portion of the piping which connects the probe 6 and the air controller 9 or to the air sucking portion of the air controller 9 to which the piping is connected. In such an arrangement, dust D or the like can still be removed to prevent the troubles of the suction pump. Moreover, if a strong swirling air flow is formed within the hollow portion 63B of the stylus protector 63, heavy dust D or the like and air can be separated. In such an arrangement, even if the filter 83 is not provided, dust D or the like can still be separated from air and accumulated in the hollow portion 63B.

In a modification shown in Fig. 9, the spindle 8 includes the air channel 82, which is provided to the side of the outer circumference side of the interior of the spindle 8, substantially in parallel to the axis of the spindle 8. The stylus protector 63 includes an air channel 631, which is provided between the outer circumference and the inner circumference thereof, which extends substantially in parallel to the outer circumference and the inner circumference of the stylus protector 63.

The opening of the air channel 82 on the lower end surface of the spindle 8 is in contact with an opening of the air channel 631 on the upper end of the stylus protector 63, so that the air channel 82 of the spindle 8 and the air channel 631 of the stylus protector 63 are intercommunicated. An end of the air channel 82 opposite the air channel 631 is connected to the air controller 9 (not shown). In this case, the air controller 9 is an air suction pump that sucks air. An opening 631A of the air channel 631 on the lower end of the stylus protector 63 faces the lower side of Fig. 9, which is the target portion of the object W. The cleaner 64 includes the air channel 82 of the spindle 8, the air channel 631 of the stylus protector 63, and the opening 631A of the air channel 631.

Such a cleaner 64 sucks air from the vicinity of the distal end 61 via the air channel 82 of the spindle 8, the air channel 631 of the stylus protector 63, and the opening 631A of the air channel 631. Accordingly, the cleaner 64 can suck and remove the dust D or the like on the target portion of the object W, so that the desirable functions and effects similar to the above embodiments can be obtained.

Incidentally, the air controller 9 of the modification may be an air compressor pump that supplies compressed air. In such a modification, the dust D or the like on the target portion can still be blown and removed, so that desirable functions and effects similar to the above embodiments can be obtained.
(iv) In the above embodiments, ways of cleaning the target portion of the object W in advance to measurement has been shown as examples, but the scope of the present invention is not limited thereto.

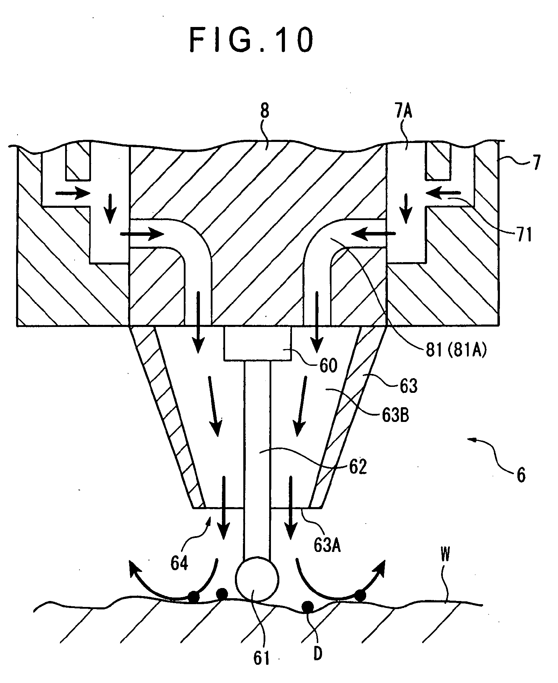

For instance, as shown in Fig. 10, measurement and cleaning of the target portion of the object W may be simultaneously conducted. In Fig. 10, while the distal end 61 of the probe 6 similar to that of the first embodiment is contacted to the target portion of the object W to detect coordinates, air is blown from the opening 63A to blow and remove dust D or the like in the vicinity of the target portion.

In this case, if the distal end 61 is contacted to the target portion of the object W while blowing air from the opening 63A, air reaches the target portion and remove the dust D or the like before the distal end 61 reaches the target portion, so that when the distal end 61 contacts to the target portion, the target portion is cleaned. Accordingly, measurement errors caused by a spike noise and the like can be prevented, thereby providing the desirable functions and effects similar to the above embodiments.

In addition, since measurement and cleaning can be simultaneously conducted in this modification, time required for measurement can be reduced to enhance work efficiency.

## Claims

1. A measuring machine (1) that has a probe (6) to be contacted to a target portion of an object (W) while the probe (6) and the object (W) are relatively displaced to measure a dimension and the like of the object (W) by the relative displacement, the measuring machine (1) comprising:
an air controller (9) that supplies or sucks air, wherein the probe (6) includes:
a stylus (62) that has a distal end (61) to be contacted to the target portion of the object (W); and
a cleaner (64) that is connected to the air controller (9) to blow air to the vicinity of the distal end (61) or suck air from the vicinity of the distal end (61), and the cleaner (64) blows or sucks air substantially in the same direction as the stylus (62), **characterised in that** the probe (6) includes a stylus protector (63) that covers the stylus (62), and the cleaner (64) is provided to the stylus protector (63).

2. The measuring machine according to claim 1, wherein
the stylus protector (63) is a hollow member having an opening (63A) on an end near the distal end (61),
the stylus (62) is inserted into the opening (63A) of the stylus protector (63), and
the cleaner (64) blows or sucks air via a hollow portion (63B) and the opening of the stylus protector (63).

3. The measuring machine (1) according to any one of claims 1 to 2, wherein
the probe (6) is attached to a movable member (8) provided in a manner movable via an air bearing (7), and
the air controller (9) supplies air to the cleaner (64) and the air bearing (7).

4. The measuring machine (1) according to claim 3, wherein
the movable member (8) includes an air guide (81) that guides air consumed by the air bearing (7), and
the air controller (9) supplies air to the air cleaner (64) via the air bearing (7) and the air guide (81).

5. The measuring machine (1) according to any one of claims 1 to 2, further comprising:
a temperature controlled space (A) isolated from the exterior; and
a temperature controller (91) that supplies air of predetermined temperature to the temperature controlled space (A) to control temperature of the temperature controlled space (A), wherein
the probe (6) is provided within the temperature controlled space (A), and
the temperature controller (91) serves as the air controller that supplies air of the predetermined temperature to the cleaner (64).

## Patentansprüche

1. Messgerät (1), das eine Sonde (6) aufweist, die mit einem Zielgebiet eines Objekts (W) in Kontakt zu bringen ist, während die Sonde (6) und das Objekt (W) relativ zueinander verschoben werden, um eine Abmessung oder Ähnliches des Objekts (W) durch die relative Verschiebung zu messen, wobei das Messgerät (1) Folgendes umfasst:
eine Luftsteuerung (9), die Luft zuführt oder absaugt, wobei die Sonde (6) Folgendes einschließt:
einen Taststift (62), der ein entferntes Ende (61) aufweist, das mit dem Zielbereich des Objekts (W) in Kontakt gebracht werden soll; und
eine Reinigungsvorrichtung (64), die mit der Luftsteuerung (9) verbunden ist, um Luft in die Umgebung des entfernten Endes (61) zu blasen, oder um Luft aus der Umgebung des entfernten Endes (61) abzusaugen, und wobei die Reinigungsvorrichtung (64) Luft im Wesentlichen in dieselbe Richtung wie den Taststift (62) bläst oder ansaugt,
**dadurch gekennzeichnet, dass**
die Sonde (6) eine Taststiftschutzvorrichtung (63) einschließt, die den Taststift (62) bedeckt, und wobei die Reinigungsvorrichtung (64) an der Taststiftschutzvorrichtung (63) bereitgestellt ist.

2. Messgerät nach Anspruch 1, worin
die Taststiftschutzvorrichtung (63) ein hohles Element mit einer Öffnung (63a) an einem Ende in der Nähe des entfernten Endes (61) ist,
der Taststift (62) in die Öffnung (63a) der Taststiftschutzvorrichtung (63) eingeführt ist, und
die Reinigungsvorrichtung (64) Luft über den hohlen Bereich (63b) und die Öffnung der Taststiftschutzvorrichtung (63) bläst oder ansaugt.

3. Messgerät (1) nach irgend einem der Ansprüche 1 bis 2, worin
die Sonde (6) an ein bewegliches Element (8) angebracht ist, das auf bewegliche Weise über ein Luftlager (7) bereitgestellt ist, und
die Luftsteuerung (9) Luft der Reinigungsvorrichtung (64) und dem Luftlager (7) zuführt.

4. Messgerät (1) nach Anspruch 3, worin
das bewegliche Element (8) eine Luftführung (81) einschließt, die die Luft führt, die von dem Luftlager (7) verbraucht wird, und
die Luftsteuerung (9) Luft der Luftreinigungsvorrichtung (64) über das Luftlager (7) und die Luftführung (81) zuführt.

5. Messgerät (1) nach irgend einem der Ansprüche 1 bis 2, das weiterhin Folgendes umfasst:
einen temperaturgesteuerten Raum (A), der von dem Äußeren isoliert ist; und
eine Temperatursteuerung (91), die Luft einer vorbestimmten Temperatur dem temperaturgesteuerten Raum (A) zuführt, um die Temperatur des temperaturgesteuerten Raums (A) zu steuern, worin
die Sonde (6) in dem temperaturgesteuerten Raum (A) bereitgestellt ist, und
die Temperatursteuerung (91) als die Luftsteuerung dient, die Luft einer vorbestimmten Temperatur der Reinigungsvorrichtung (64) zuführt.

## Revendications

1. Machine de mesure (1) qui a un palpeur (6) à mettre en contact avec une partie cible d'un objet (W) tandis que le palpeur (6) et l'objet (W) sont déplacés de manière relative afin de mesurer une dimension et analogue de l'objet (W) par le déplacement relatif, la machine de mesure (1) comprenant :
un contrôleur d'air (9) qui délivre ou aspire de l'air, dans laquelle le palpeur (6) inclut :
un stylet (62) qui a une extrémité distale (61) à mettre en contact avec la partie cible de l'objet (W) ; et
un nettoyeur (64) qui est relié au contrôleur d'air (9) pour souffler de l'air au voisinage de l'extrémité distale (61) ou aspirer de l'air depuis le voisinage de l'extrémité distale (61), et le nettoyeur (64) souffle ou aspire de l'air sensiblement dans la même direction que le stylet (62), **caractérisée en ce que** le palpeur (6) inclut un protecteur de stylet (63) qui recouvre le stylet (62), et le nettoyeur (64) est disposé sur le protecteur de stylet (63).

2. Machine de mesure selon la revendication 1, dans laquelle
le protecteur de stylet (63) est un élément creux ayant une ouverture (63A) sur une extrémité proche de l'extrémité distale (61),
le stylet (62) est inséré dans l'ouverture (63A) du protecteur de stylet (63), et
le nettoyeur (64) souffle ou aspire de l'air via une partie creuse (63B) et l'ouverture du protecteur de stylet (63).

3. Machine de mesure (1) selon l'une quelconque des revendications 1 à 2, dans laquelle
le palpeur (6) est fixé à un élément mobile (8) agencé de manière mobile via un palier à air (7), et
le contrôleur d'air (9) délivre de l'air au nettoyeur (64) et au palier à air (7).

4. Machine de mesure (1) selon la revendication 3, dans laquelle
l'élément mobile (8) inclut un guide d'air (81) qui guide l'air consommé par le palier à air (7), et
le contrôleur d'air (9) délivre de l'air au nettoyeur à air (64) via le palier à air (7) et le guide d'air (81).

5. Machine de mesure (1) selon l'une quelconque des revendications 1 et 2, comprenant en outre :
un espace contrôlé en température (A) isolé de l'extérieur ; et
un contrôleur de température (91) qui délivre de l'air à température prédéterminée à l'espace contrôlé en température (A) afin de contrôler la température de l'espace contrôlé en température (A), dans laquelle
le palpeur (6) est disposé dans l'espace contrôlé en température (A), et
le contrôleur de température (91) sert de contrôleur d'air qui délivre de l'air à la température prédéterminée au nettoyeur (64).
